# EUROPEAN PATENT SPECIFICATION

(11) **EP 3 938 865 B1**
(45) Date of publication and mention of the grant of the patent: **18.11.2026**
(21) Application number: 20708368.4
(22) Date of filing: 30.01.2020
(51) Int. Cl.: G06F 1/30, G06F 11/20, G06F 11/16, G06F 1/26

(54) **VARIABLE REDUNDANCY DATA CENTER POWER TOPOLOGY**
STROMVERSORGUNGSTOPOLOGIE FÜR RECHENZENTREN MIT VARIABLER REDUNDANZ
TOPOLOGIE DE L'ALIMENTATION DES CENTRES DE DONNÉES À REDONDANCE VARIABLE

(30) Priority: 15.03.2019 US 201916355434
(43) Date of publication of application: 19.01.2022
(73) Proprietor: Microsoft Technology Licensing, LLC, Redmond, WA 98052-6399 (US)
(72) Inventor: KRUEGER, Keith A., Redmond, Washington 98052-6399 (US); KUNNATH, Lalu Vannankandy, Redmond, Washington 98052-6399 (US); JOHNSON, Kristofer Andrew, Redmond, Washington 98052-6399 (US); BARACANI, Mark Joseph, Redmond, Washington 98052-6399 (US); SEATON, Scott Thomas, Redmond, Washington 98052-6399 (US); MORALES, Osvaldo Patricio, Redmond, Washington 98052-6399 (US); SOLOMON, Steven, Redmond, Washington 98052-6399 (US); GAUTHIER, David Thomas, Redmond, Washington 98052-6399 (US)
(74) Representative: Grünecker Patent- und Rechtsanwälte PartG mbB
(86) International application number: PCT/US2020/015756
(87) International publication number: WO 2020/190390

(56) References cited:
- US-A1- 2005 071 092
- US-A1- 2012 181 869
- US-A1- 2012 242 151
- US-A1- 2018 052 503
- US-B2- 9 590 404

## Description

### BACKGROUND

The recent rise of online services has led a significant increase in the development, expansion, and improvement of data centers and similar technologies. Such data centers may be used, for example, to provide cloud computing services, facilitate popular social media services, or to provide infrastructure for e-commerce and other web sites.

A typical modern data center may include thousands, tens of thousands, hundreds of thousands, or more servers or other computing devices. A data center may also include supporting equipment such as switches, routers, input/output equipment, temperature management equipment, and/or the like. A data center also typically includes equipment for powering the computing devices and the supporting equipment. An example of a typical modern data center is inter alia disclosed in US 2012/0242151 A1.
In particular, US 2012/0242151 A1 discloses that equipment in a data center may be wired in a topology in which each piece of equipment is served by one Static Transfer Switch (STS). Each group of equipment is assigned a main Uninterruptable Power Supply (UPS) and a reserve UPS, which may be connected to an underlying power source such as a utility. The main UPS and the reserve UPS are connected to the first and second inputs of an STS. For dual-corded equipment, the first cord is served by the output of the STS, while the second cord is served by the main UPS without an intervening STS. Thus, if the main UPS fails, the STS transfers power to the second UPS, thereby allowing the first cord to be powered. The second cord, not being served by the STS, simply loses power, thereby doubling the power draw at the first cord at roughly the same time that the transfer occurs.
US 2012/0242151 A1 further discloses that in a method of wiring a data center a first input of a STS may be connected to a first UPS, a second UPS may be connected to a second input of said STS, the second UPS being distinct from the first UPS, a first cord of a dual-corded equipment unit may be connected to an output of the STS, and a second cord of the dual-corded equipment unit may be connected to the first UPS without there being any intervening STS being the second cord and the first UPS.
An example of a modern data center with a redundant power distribution system is described in US2012/181869 A1. In particular, US2012/181869 A1 relates to providing improved automatic transfer switches, for switching between two or more power sources (e.g., due to power failures such as outages or power quality issues).
A further example of a current topology used for providing redundancy in data center power management is provided in US2018/0052503 A1, where a power control switch is used to dynamically change the redundancy mode of a dual-corded apparatus between 2N and 1N by selectively applying power from a first and a second power source.

### SUMMARY OF THE DISCLOSURE

The present invention relates to the subject-matter of the independent claims. Advantageous embodiments and further developments are the subject-matter of the dependent claims. The in the following disclosed examples merely serve to illustrate certain technical aspects of the invention. This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Briefly stated, the disclosed technology is generally directed to data center power topologies wherein an apparatus includes a first power train and a second power train. The first power train includes a first plurality of components. The first power train is configured to provide power to a first plurality of server racks of a first data center at a first level of high-availability service associated with a first uptime. The first plurality of components includes a first subset of the first plurality of components and a second subset of the first plurality of components. The second power train includes a second plurality of components. The second power train is configured to provide power to a second plurality of server racks of the first data center at a second level of high-availability service that is associated with a second uptime, wherein the first uptime is greater than the second uptime. The second plurality of components includes a first subset of the second plurality of components and a second subset of the second plurality of components. The second subset of the first plurality of components is the second subset of the second plurality of components.

Other aspects of and applications for the disclosed technology will be appreciated upon reading and understanding the attached figures and description.

### BRIEF DESCRIPTION OF THE DRAWINGS

Non-limiting and non-exhaustive examples of the present disclosure are described with reference to the following drawings. In the drawings, like reference numerals refer to like parts throughout the various figures unless otherwise specified. These drawings are not necessarily drawn to scale.

For a better understanding of the present disclosure, reference will be made to the following Detailed Description, which is to be read in association with the accompanying drawings, in which:
FIG. 1 is a block diagram illustrating one example of a suitable environment in which aspects of the technology may be employed;
FIG. 2 is a block diagram illustrating one example of an apparatus for a data center;
FIGs. 3A-3C are a block diagram illustrating an example of the apparatus of FIG. 2;
FIG. 4 is a block diagram illustrating another example of an apparatus for a data center;
FIG. 5 is a flow diagram illustrating an example of a process; and
FIG. 6 is a block diagram illustrating example hardware components of a computing device, in accordance with aspects of the present disclosure.

### DETAILED DESCRIPTION

The following description provides specific details for a thorough understanding of, and enabling description for, various examples of the technology. One skilled in the art will understand that the technology may be practiced without many of these details. In some instances, well-known structures and functions have not been shown or described in detail to avoid unnecessarily obscuring the description of examples of the technology. It is intended that the terminology used in this disclosure be interpreted in its broadest reasonable manner, even though it is being used in conjunction with a detailed description of certain examples of the technology. Although certain terms may be emphasized below, any terminology intended to be interpreted in any restricted manner will be overtly and specifically defined as such in this Detailed Description section. Throughout the specification and claims, the following terms take at least the meanings explicitly associated herein, unless the context dictates otherwise. The meanings identified below do not necessarily limit the terms, but merely provide illustrative examples for the terms. For example, each of the terms "based on" and "based upon" is not exclusive, and is equivalent to the term "based, at least in part, on", and includes the option of being based on additional factors, some of which may not be described herein. As another example, the term "via" is not exclusive, and is equivalent to the term "via, at least in part", and includes the option of being via additional factors, some of which may not be described herein. The meaning of "in" includes "in" and "on." The phrase "in one embodiment," or "in one example," as used herein does not necessarily refer to the same embodiment or example, although it may. Use of particular textual numeric designators does not imply the existence of lesser-valued numerical designators. For example, reciting "a widget selected from the group consisting of a third foo and a fourth bar" would not itself imply that there are at least three foo, nor that there are at least four bar, elements. References in the singular are made merely for clarity of reading and include plural references unless plural references are specifically excluded. The term "or" is an inclusive "or" operator unless specifically indicated otherwise. For example, the phrases "A or B" means "A, B, or A and B." As used herein, the terms "component" and "system" are intended to encompass hardware, software, or various combinations of hardware and software. Thus, for example, a system or component may be a process, a process executing on a computing device, the computing device, or a portion thereof.

Briefly stated, the disclosed technology is generally directed data center power topologies, wherein an apparatus includes a first power train and a second power train. The first power train includes a first plurality of components. The first power train is configured to provide power to a first plurality of server racks of a first data center at a first level of high-availability service associated with a first uptime. The first plurality of components includes a first subset of the first plurality of components and a second subset of the first plurality of components. The second power train includes a second plurality of components. The second power train is configured to provide power to a second plurality of server racks of the first data center at a second level of high-availability service that is associated with a second uptime, wherein the first uptime is greater than the second uptime. The second plurality of components includes a first subset of the second plurality of components and a second subset of the second plurality of components. The second subset of the first plurality of components is the second subset of the second plurality of components.

In some examples, power may be provided in one data center with high availability, with different levels of availability service for different loads in the same data center. Availability is generally defined as percentage uptime for a year. 99.9% uptime per year may be referred to as 3x9 (8.77 hours of downtime per year), 99.99% uptime per year may be referred to as 4x9 (52.60 minutes of downtime per year), and 99.999% may be referred to as 5x9 (5.26 minutes of downtime per year). In some examples, power may be provided at a data center with 5x9 availability for some servers in the data center, 4x9 availability for other servers in the data center, and 3x9 availability for yet other servers in the data center.

The power for the data center loads may be provided by two or more different topologies, one for each level of availability service, where the different topologies have components in common with each other. For instance, in some examples, there is one topology for 5x9 loads, another topology for 4x9 loads, and another topology for 3x9 loads, all in the same data center, in which three different share components with each other. For example, the topology for the 5x9 loads may share some components with the topology for the 4x9 loads, the topology for the 3x9 loads may share some component with the topology with the 4x9 loads, and the topologies for all three loads may share some components with each other.

Also, in some examples, the power from each of the different topologies is selectively consumed on the downstream side by at least some of the loads.

### Illustrative Devices/Operating Environments

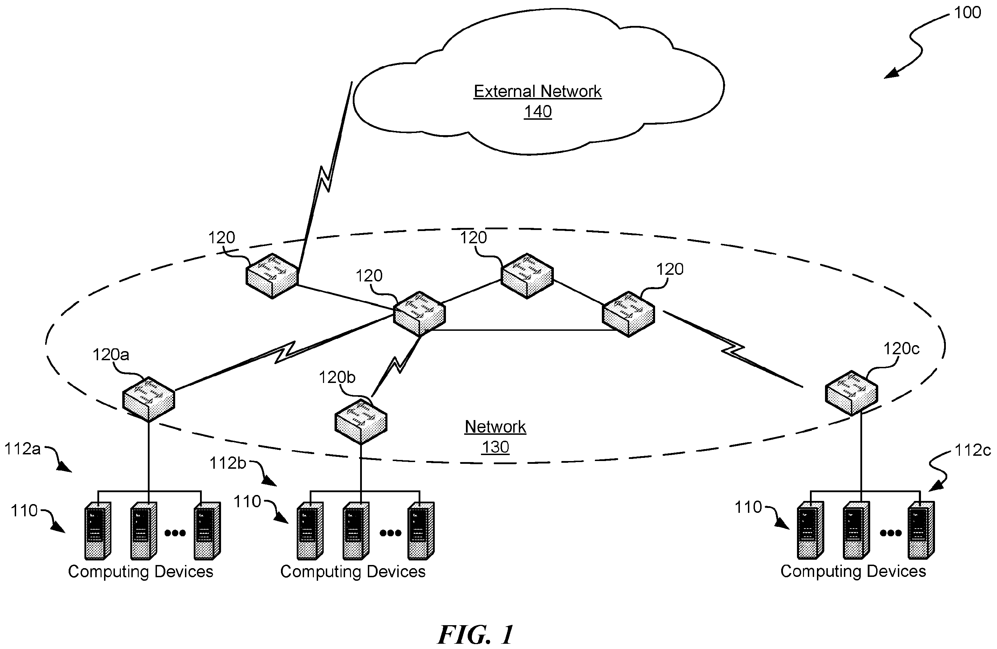

FIG. 1 is a diagram of environment 100 in which aspects of the technology may be practiced. As shown, environment 100 includes computing devices 110, as well as network nodes 120, connected via network 130. Even though particular components of environment 100 are shown in FIG. 1, in other examples, environment 100 can also include additional and/or different components. For example, in certain examples, the environment 100 can also include network storage devices, maintenance managers, and/or other suitable components (not shown). Computing devices 110 shown in FIG. 1 may be in various locations, including on premise, in the cloud, or the like. For example, computer devices 110 may be on the client side, on the server side, or the like.

As shown in FIG. 1, network 130 can include one or more network nodes 120 that interconnect multiple computing devices 110, and connect computing devices 110 to external network 140, e.g., the Internet or an intranet. For example, network nodes 120 may include switches, routers, hubs, network controllers, or other network elements. In certain examples, computing devices 110 can be organized into racks, action zones, groups, sets, or other suitable divisions. For example, in the illustrated example, computing devices 110 are grouped into three host sets identified individually as first, second, and third host sets 112a-112c. In the illustrated example, each of host sets 112a-112c is operatively coupled to a corresponding network node 120a-120c, respectively, which are commonly referred to as "top-of-rack" or "TOR" network nodes. TOR network nodes 120a-120c can then be operatively coupled to additional network nodes 120 to form a computer network in a hierarchical, flat, mesh, or other suitable types of topology that allows communications between computing devices 110 and external network 140. In other examples, multiple host sets 112a-112c may share a single network node 120. Computing devices 110 may be virtually any type of general- or specific-purpose computing device. For example, these computing devices may be user devices such as desktop computers, laptop computers, tablet computers, display devices, cameras, printers, or smartphones.

Various examples of the disclosure are employed in a data center environment. In a data center environment, computing devices 110 may be server devices such as application server computers, virtual computing host computers, or file server computers. Moreover, computing devices 110 may be individually configured to provide computing, storage, and/or other suitable computing services.

### Illustrative System

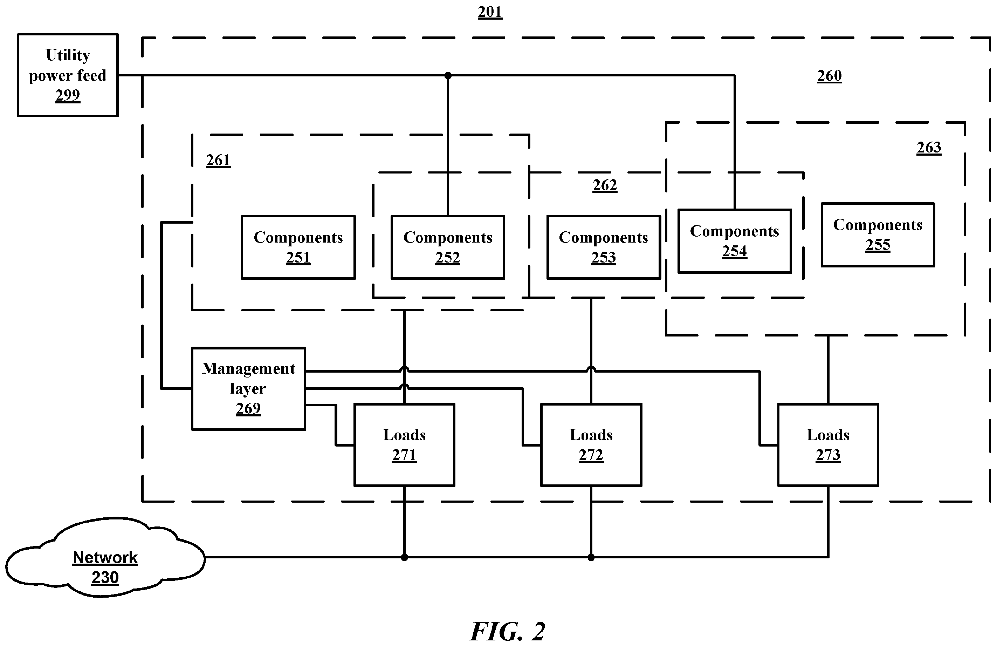

FIG. 2 is a block diagram of an example system 201. System 201 may include data center 260, network 230, and utility power feed 299. Data center 260 may include availability path 261, availability path 262, availability path 263, management layer 269, loads 271, loads 272, and loads 273. Availability path 261 may include components 251 and components 252. Availability path 262 may include components 252, components 253, and components 254. Availability path 263 may include component 254 and components 255.

In some examples, availability paths 261, 262, and 263 are arranged to receive utility power from utility power feed 299. In some examples, availability path 261 is arranged to provide power to loads 271, availability path 262 is arranged to provide power to loads 272, and availability path 263 is arranged to provide power to loads 273. In some examples, some loads may be powered in a selectable manner, being driven by a selected one of the availability paths based on existing availability requirements. In some examples, the loads (271-273) may include servers racks that includes servers. In some examples, the loads (271-273) are connected to network 230 for network communication.

In some examples, management layer 269 is configured to perform various management functions, such is determining how much load is being consumed by each of the availability paths 261-263, controlling transfer of loads to the backup generator if an outage is detected in utility power, performing workload managements functions including shedding and returning loads, management and control of switches including static switches and automatic transfer switches, opening and closing circuit breakers, and/or the like. In some examples, the management layer may include power meters, an electrical power monitoring system, or the like, so that management layer 269 receives information about power flowing through various parts of data center 260. In some examples, management layer 269 may communicate with network 230, and may perform notification or signaling into software, fabric controllers, and/or cloud services.

Some examples, management layer 269 may perform functions associated with power capping, workload management, and the control planes that run servers in the loads in conjunction with communication over network 230. In some examples in which there are loads that have selected availability, management layer 269 may determine an availability service level for a load and perform control so that the load is driven in accordance with the determine availability service level, as discussed in greater detail below.

Management layer 269 may also receive and use information such as customer demand, expected customer demand, power grid information such as power levels and power prices, and/or the like.

As shown in FIG. 2, availability path 261 and availability path 262 have components in common with each other in some examples. Similarly, availability path 262 and availability path 263 have components in common with each other in some examples. Although not shown in FIG. 2, in some examples, all three availability paths 261, 262, and 263 have components in common with each other in some examples. In this way, in some examples, different availability topologies are grouped together into one datacenter in an efficient and cost-effective manner.

Availability paths may be different in some components due to differences in the provided availability, while still having some components in common. For instance, some availability paths may include a backup generator in order to provide greater availability, while other paths do not use a backup generator. Some availability paths may use dual corded servers with two PDUs in order to provide greater availability, while other availability paths use single-corded servers with one PDU. Some availability paths may use distributed redundancy to provide alternate power sources under light loads conditions, while other availability paths do not.

In some examples, availability path 261 is a 3x9 availability path, availability path 262 is a 4x9 availability path, and availability path 263 is a 5x9 availability path. In some examples, availability path 261 achieves 3x9 availability by using uninterruptible power supplies (UPSs), and using no backup generator, but rather running on battery only in the event of an outage. In some examples, availability path 262 uses the aspects of availability path 262 that increase availability, and has still further availability using a backup generator and distributed redundancy with alternate sources under light load conditions. In some examples, loads can be changed during maintenance to an alternate source, or, responsive to an outage or failure occurring in one cell connected to one bus, power can be switched another bus that has a cell with an alternate source.

In some examples, availability path 263 uses the aspects of availability path 262 that increase availability, and has still further availability using dual corded servers with each server rack in the load being connected to two PDUs and two sets of busways and dual power supplies in the racks.

In some examples, availability paths that use a backup generator have limited capacity relative what utility power feed 299 could otherwise provide, because utility power feed 299 provides more capacity than the backup generator, but the backup generator must be able to backup the entire load in order to achieve the availability of the path the greatest availability. In some examples, availability path 262 and availability path 263 make use of a backup generator, but availability path 261 does not. In this way, in some examples, the extra capacity of utility power feed 299 beyond the capacity of the backup generator can be assigned to availability path 261.

In some examples, by making use of this extra capacity, and using common components in the availability paths, different availability can be efficiently and cost-effectively provided in the same data center. In some examples, this also allows different service availabilities to be provide for different loads while correctly providing for capacity forecasting and carrying costs in a way that may otherwise be problematic if the different availability loads were driven by entirely separate topologies.

As discussed above, in some examples, different availability service levels may be provided in selectable manner. In some examples, portions of data center 260 may be composable in a late stage of construction, by making connections to compose the availability via small construction changes such as re-wiring one circuit panel to another circuit panel.

In some examples, assignment or reassignment of availability service levels can occur after construction. The assignment or reassignment of availability service levels after construction may be accomplished in different ways in different examples. For instance, in some examples, data center 260 may include at least one physical power panel or power distribution unit (PDU) that takes power sources from each of the availability paths, and allow the power to be selectively consumed by the loads. Also, in some examples, busways may be used, and a dynamic switching device including circuit breakers, automatic transfer switches, static switches, and/or the like may be used to aggregate and manage which availability paths are feeding downstream loads.

In some examples, the racks and the PDUs and the distribution of the racks may be part of the selection, where the racks themselves have intelligence that may used in the selection. In various examples, the selection may be made at the PDU level, at the server rack busway level, or inside the server rack itself. In some examples, the server rack may be connected, for example via PDUs, power panels, and/or busways to the availability paths or to dynamic switching devices. Using the selection may prevent the need for maintaining an inventory of different availabilities and systems.

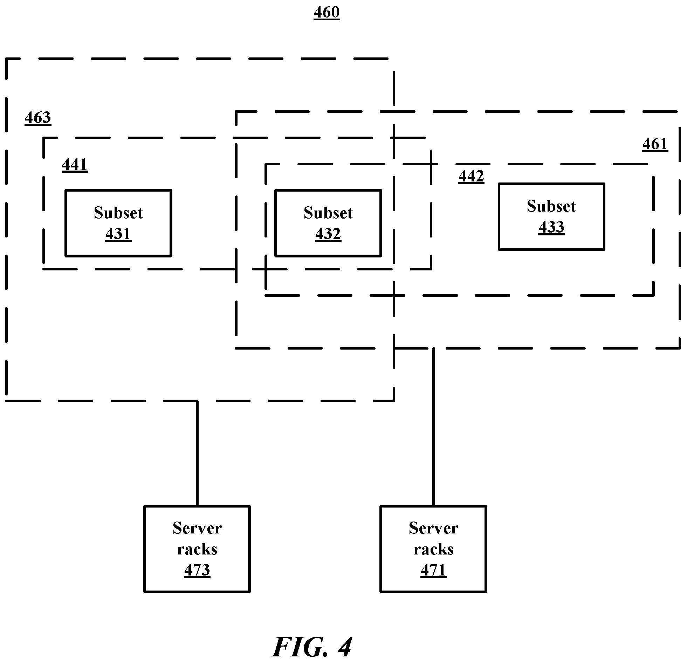

Although FIG. 2 shows an example of data center 260 that includes three availability paths, some examples include two availability paths, and some examples include four or more availability paths. An example of data center 260 with two availability paths rather than three is discussed in greater detail below with regard to FIG. 4.

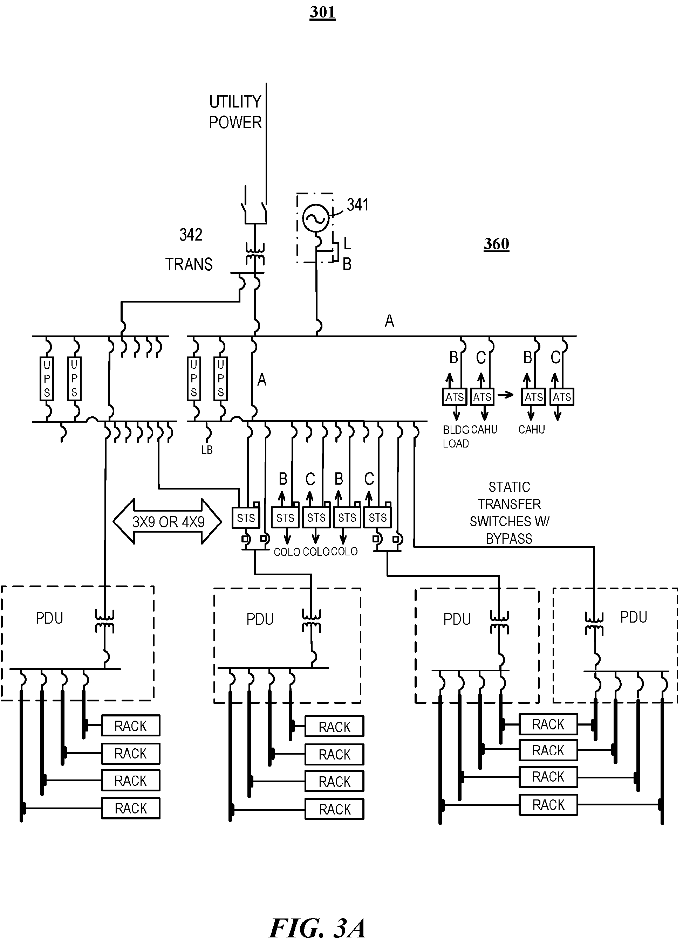

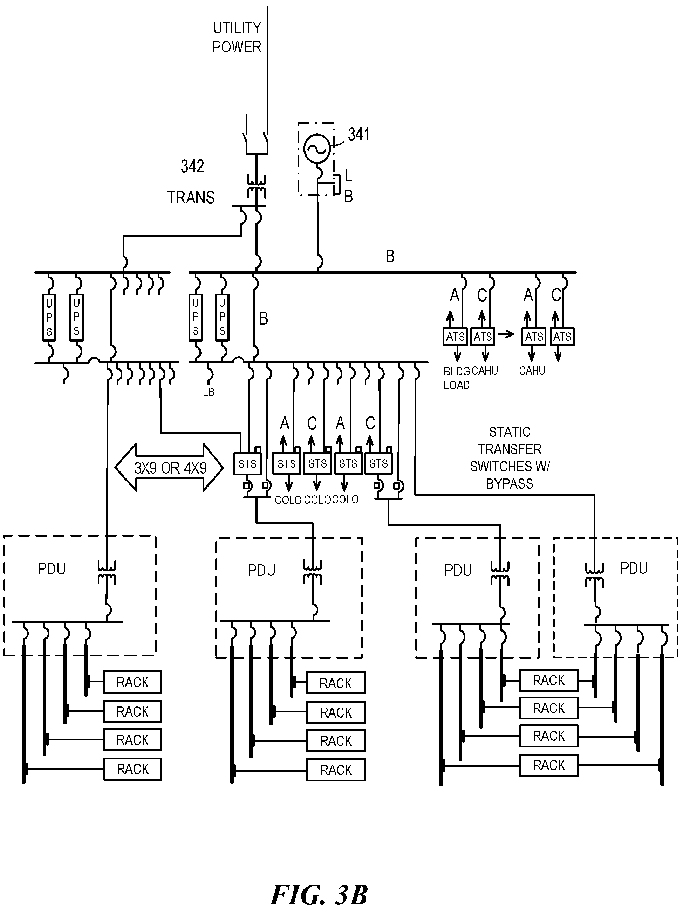

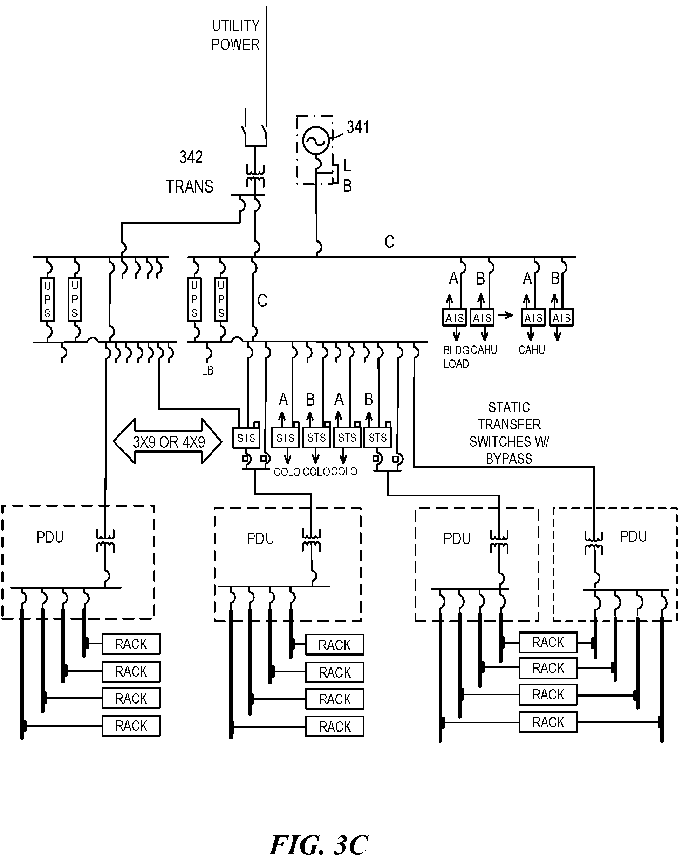

FIGs. 3A-3C are a block diagram illustrating an example of system 301, which may be employed as an example of system 201 FIG. 2. System 301 includes data center 360, which may include cell A, cell B, and Cell C. Each cell (A-C) may include backup generator 341, transformer 342, uninterruptible power supplies UPS, automatic transfer switches ATS, static transfer switches STS, power distribution units PDU, and server racks RACK.

In some examples, backup generator 341 is arranged to provide backup power for 4x9 and 5x9 loads in the event of loss of utility power. In some examples, logic in the management layer monitors the incoming power, and sends a start signal to backup generator 341 if an outage is detected, causing a transfer of the 4x9 and 5x9 loads to backup generator power. In some examples, the 3x9s are configured to run on battery power in the event of a utility power outage, and the 3x9 loads will drop if utility power has not returned by the time the batteries run out. In some examples, the topology for the 5x9 loads and the topology for powering the 4x9 loads share the backup generator and corresponding control as common components.

In some examples, transformer 342 is arranged to step down utility power, which may be medium voltage electrical campus distribution in some examples, into a lower voltage three-phase power. In some examples, static switches STS are high-speed components that transfer the loads from one source to another without ever connecting the two sources together and without dropping the load, so that no interruption is experienced by the load.

In some examples, the three-phase power goes through the static switches ready to make a transfer is necessary. In some examples, if a fault condition is detected, such as an undervoltage condition, an out-of-frequency condition, other power disturbance, or the like, the loads will transfer to an alternate bus to one of the other cells (e.g., from cell A to cell B). The use of cells A, B, and C with switching provided by static switches STS is an example of distributed redundancy. In some examples, the topology for powering the 5x9 loads and the topology for powering the 4x9 loads share the distributed redundancy as components in common.

In some examples, ATSs move mechanical and building loads to an alternate bus for an alternate cell in the event of an outage. In some examples, the PDUs each include a transformer to transform the 480V signal to a 240V signal that the loads run at. In some examples, the PDUs for the 3x9 loads and the 4x9 loads each use one busway for proving power to the loads in a single-corded topology. In some examples, for the 5x9 RACK loads, there are two PDUs, two sets of busways, and dual power supplies in RACKs. In some examples, the two PDUs, two sets of busways, and dual power supplies in RACKs act as components of the topology for powering the 5x9 loads that is not shared by the topology for powering the 4x9 loads or the 3x9 loads.

In some examples, UPSs act as common components for the topology powering the 3x9 loads, the topology powering the 4x9 loads, and the topology powering the 5x9 loads. In and examples, the UPS and battery functionality may exist in the servers or server racks.

In some examples, the topologies for providing power to a 5x9 load, 4x9 load, or 3x9 load is selectable at the time of final installation, but remains fixed thereafter. In this way, in these examples, the equipment is designed to select from availability paths, with loads selected at the time of installation. In some examples, rather than loads being fixed at the time of installation, additional switching is included in data center 360 such that the loads can be dynamically assigned or re-assigned on the fly, after installation, to be provided power as 5x9 loads, 4x9 loads, or 3x9 loads.

FIG. 4 is a block diagram illustrating an example of data center 460. Data center 460 may include first power train 463 and second power train 461. First power train 463 may include first plurality of components 441. In some examples, first power train 463 is configured to provide power to a first plurality of server racks 473 of first data center 460 at a first level of high-availability service associated with a first uptime. First plurality of components 441 may include first subset 431 of first plurality of components 441 and second subset 432 of first plurality of components 441. Second power train 461 may include second plurality of components 442. In some examples, second power train 461 is configured to provide power to second plurality of server racks 471 of data center 460 at a second level of high-availability service that is associated with a second uptime. In some examples, the first uptime is greater than the second uptime. Second plurality of components 442 may include first subset 433 of second plurality of components 442 and second subset 431 of second plurality of components 442, where second subset 431 of first plurality of components 441 is second subset 431 of second plurality of components 442.

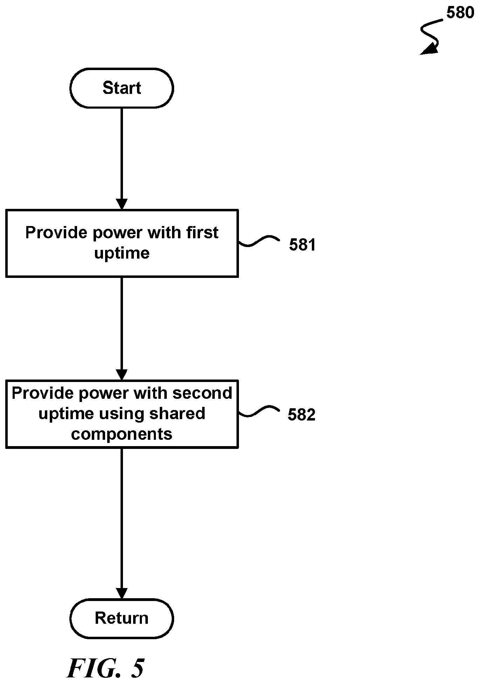

FIG. 5 is a flow diagram illustrating an example of a process (580).

In the illustrated example, step 581 occurs first. At step 581, in some examples, a first power train is employed to provide power to a first plurality of server racks of a first data center at a first level of high-availability service associated with a first uptime. In some examples, a first power train includes a first plurality of components. In some examples, the first plurality of components includes a first subset of the first plurality of components and a second subset of the first plurality of components.

As shown, step 582 occurs next in some examples. At step 582, in some examples, a second power train is employed to provide power to a second plurality of server racks of the first data center at a second level of high-availability service that is associated with a second uptime. In some examples, the second power train includes a second plurality of components. In some examples, the first uptime is greater than the second uptime. In some examples, the second plurality of components includes a first subset of the second plurality of components and a second subset of the second plurality of components. In some examples, the second subset of the first plurality of components is the second subset of the second plurality of components.

The process may then proceed to the return block, where other processing is resumed.

### Illustrative Computing Device

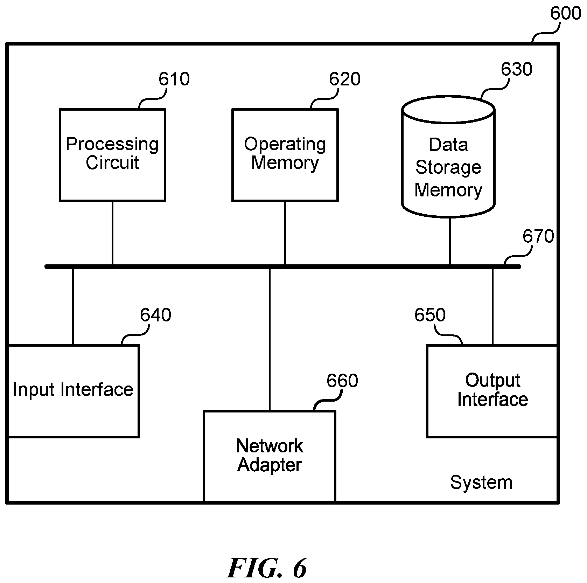

FIG. 6 is a high-level illustration of example hardware components of computing device 600, which may be used to practice various aspects of the technology. For example, computing device 600 may be employed as one of the computing devices 110 of FIG. 1, one of the servers of the server rack load of FIG. 2, 3, or 4, and/or the like. As shown, computing device 600 includes processing circuit 610, operating memory 620, data storage memory 630, input interface 640, output interface 650, and network adapter 660. These aforementioned components may be interconnected by bus 670.

Computing device 600 may be virtually any type of general- or specific-purpose computing device. For example, computing device 600 may be a user device such as a desktop computer, a laptop computer, a tablet computer, a display device, a camera, a printer, or a smartphone. Likewise, computing device 600 may also be server device such as an application server computer, a virtual computing host computer, or a file server computer.

Computing device 600 includes processing circuit 610 which may be adapted to execute instructions, such as instructions for implementing the above-described processes or other technology. Processing circuit 610 may include a microprocessor and/or a microcontroller and may serve as a control circuit. The aforementioned instructions, along with other data (e.g., datasets, metadata, operating system instructions, etc.), may be stored in operating memory 620 and/or data storage memory 630.

In one example, operating memory 620 is employed for run-time data storage while data storage memory 630 is employed for long-term data storage. However, each of operating memory 620 and data storage memory 630 may be employed for either run-time or long-term data storage. Each of operating memory 620 and data storage memory 630 may also include any of a variety of data storage devices/components, such as volatile memories, semi-volatile memories, non-volatile memories, random access memories, static memories, disks, disk drives, caches, buffers, or any other media that can be used to store information. However, operating memory 620 and data storage memory 630 specifically do not include or encompass communications media, any communications medium, or any signals per se.

Also, computing device 600 may include or be coupled to any type of computer-readable media such as computer-readable storage media (e.g., operating memory 620 and data storage memory 630) and communication media (e.g., communication signals and radio waves). While the term computer-readable storage media includes operating memory 620 and data storage memory 630, this term specifically excludes and does not encompass communications media, any communications medium, or any signals per se.

Computing device 600 also includes input interface 640 and output interface 650. Input interface 640 may be adapted to enable computing device 600 to receive information from a power monitor, power supply, power source, and/or other information source. Such information may include an instantaneous power draw from a power source as well as any of the other information mentioned in this disclosure. Output interface 650 may be adapted to provide instructions to power supplies. For example, one such instruction is an instruction to a power supply to adjust a target DC output voltage. Output interface 650 may include a RS-232 interface, an I2C interface, a GPIB interface, and/or the like.

Computing device 600 also includes network adapter 660 which may be adapted to interface computing device 600 to a network such as network 106. Network adapter 660 may include a network interface card (NIC), a media access control (MAC) interface, a physical level interface (PHY), and/or the like. Network adapter 660 may also serve as an input and/or output interface for computing device 600.

### Conclusion

While the above Detailed Description describes certain examples of the technology, and describes the best mode contemplated, no matter how detailed the above appears in text, the technology can be practiced in many ways. Details may vary in implementation, while still being encompassed by the technology described herein. As noted above, particular terminology used when describing certain features or aspects of the technology should not be taken to imply that the terminology is being redefined herein to be restricted to any specific characteristics, features, or aspects with which that terminology is associated. In general, the terms used in the following claims should not be construed to limit the technology to the specific examples disclosed herein, unless the Detailed Description explicitly defines such terms. Accordingly, the actual scope of protection is defined by the appended claims.

## Claims

1. An apparatus, comprising:
a first power train (463) including a first plurality of components (441), wherein the first power train (463) is configured to provide power to a first plurality of server racks (473) of a first data center (460) at a first level of high-availability service associated with a first uptime availability, and wherein the first plurality of components (441) includes a first subset (431) of the first plurality of components (441) and a second subset (432) of the first plurality of components (441);
a second power train (461) including a second plurality of components (442), wherein the second power train (461) is configured to provide power to a second plurality of server racks (471) of the first data center (460) at a second level of high-availability service that is associated with a second uptime availability, wherein the first uptime availability is greater than the second uptime availability,
wherein the second plurality of components (442) includes a first subset (433) of the second plurality of components (442) and a second subset (432) of the second plurality of components (442), and wherein the second subset (432) of the first plurality of components (441) is the second subset (432) of the second plurality of components (442).

2. The apparatus of claim 1, wherein the second subset (432) of the first plurality of components (441) includes a plurality of uninterruptible power supplies.

3. The apparatus of claim 1, wherein the second subset (432) of the first plurality of components (441) includes a plurality of static switches that are configured to provide an alternate source of power via an alternate busway.

4. The apparatus of claim 1, further comprising a control component that is configured to provide power to a third plurality of server racks based a selection between a plurality of power trains including the first power train (463) and the second power train (461).

5. The apparatus of claim 1, wherein the first power train (463) includes a backup generator and control for transferring the first plurality of server racks (473) to be powered by the backup generator responsive to detection of a failure, and wherein the second power train (461) is configured to be powered by utility power only.

6. The apparatus of claim 5, wherein the first power train (463) is powered based on a capacity of the backup generator, and wherein the second power train (461) is powered based on a difference between a capacity of the utility power and the capacity of the backup generator.

7. A method, comprising:
employing a first power train (463) to provide power to a first plurality of server racks (473) of a first data center (460) at a first level of high-availability service associated with a first uptime availability, wherein a first power train (463) includes a first plurality of components (441), and wherein the first plurality of components (441) includes a first subset (431) of the first plurality of components (441) and a second subset (432) of the first plurality of components (441);
employing a second power train (461) to provide power to a second plurality of server racks (471) of the first data center (460) at a second level of high-availability service that is associated with a second uptime availability, wherein the second power train (461) includes a second plurality of components (442), wherein the first availability is greater than the second uptime availability,
wherein the second plurality of components (442) includes a first subset (433) of the second plurality of components (442) and a second subset (432) of the second plurality of components (442), and wherein the second subset (432) of the first plurality of components (441) is the second subset (432) of the second plurality of components (442).

8. The method of claim 7, further comprising powering at least one server rack based on a selection between a plurality of power trains including the first power train (463) and the second power train (461).

9. The method of claim 7, further comprising transferring the first plurality of server racks (473) to be powered by a backup generator of the first power train (463) responsive to detection of a failure, wherein powering the second power train (461) is accomplished by utility power only.

10. The method of claim 9, wherein powering the first plurality of server racks (473) is based on a capacity of the backup generator, and wherein powering the second plurality of server racks (471) is based on a difference between a capacity of the utility power and the capacity of the backup generator.

11. The apparatus of claim 1, wherein the first power train (463) includes distributed redundancy, and wherein the second power train (461) is powered by one power source only.

12. The apparatus of claim 1, wherein the first power train (463) includes two power distribution units and two busways for providing power to the first plurality of server racks (473) in a dual corded topology, and wherein the second power train (461) includes one power distribution unit and one busway for providing power to the second plurality of servers racks (471) in a single corded topology.

13. The apparatus of claim 4, wherein the selection is a dynamic selection.

14. The apparatus of claim 1, wherein the second subset (432) of the first plurality of components (441) includes a plurality of static switches that are configured to provide an alternate source of power via at least two alternate busways.

15. The apparatus of claim 14, the apparatus further comprising a plurality of cells including a first cell and a second cell, each cell of the plurality of cells having at least two power trains and at least two power distribution units, wherein a first of the at least two alternate busways is a busway to the first cell, and wherein a second of the at least two alternate busways is a busway to the second cell.

## Patentansprüche

1. Vorrichtung, umfassend:
einen ersten Stromversorgungsstrang (463), der eine erste Mehrzahl von Komponenten (441) umfasst, wobei der erste Stromversorgungsstrang (463) dazu ausgelegt ist, eine erste Mehrzahl von Server-Racks (473) eines ersten Rechenzentrums (460) mit Strom zu versorgen, und zwar auf einer ersten Stufe eines Hochverfügbarkeitsdienstes, die mit einer ersten Verfügbarkeitszeit verbunden ist, und wobei die erste Mehrzahl von Komponenten (441) eine erste Teilmenge (433) der ersten Mehrzahl von Komponenten (441) und eine zweite Teilmenge (432) der ersten Mehrzahl von Komponenten (441) umfasst;
einen zweiten Stromversorgungsstrang (461), der eine zweite Mehrzahl von Komponenten (442) umfasst, wobei der zweite Stromversorgungsstrang (461) dazu ausgelegt ist, eine zweite Mehrzahl von Server-Racks (471) des ersten Rechenzentrums (460) auf einer zweiten Stufe eines Hochverfügbarkeitsdienstes, die mit einer zweiten Verfügbarkeitszeit verbunden ist, mit Strom zu versorgen, wobei die erste Verfügbarkeitszeit größer als die zweite Verfügbarkeitszeit ist, wobei die zweite Mehrzahl von Komponenten (442) eine erste Teilmenge (433) der zweiten Mehrzahl von Komponenten (442) und eine zweite Teilmenge (432) der zweiten Mehrzahl von Komponenten (442) umfasst; und
wobei die zweite Teilmenge (432) der ersten Mehrzahl von Komponenten (441) die zweite Teilmenge (432) der zweiten Mehrzahl von Komponenten (442) ist.

2. Vorrichtung nach Anspruch 1, wobei die zweite Teilmenge (432) der ersten Mehrzahl von Komponenten (441) eine Mehrzahl von unterbrechungsfreien Stromversorgungen umfasst.

3. Vorrichtung nach Anspruch 1, wobei die zweite Teilmenge (432) der ersten Mehrzahl von Komponenten (441) eine Mehrzahl von statischen Schaltern umfasst, die dazu ausgelegt sind, eine alternative Stromquelle über eine alternative Stromschiene bereitzustellen.

4. Vorrichtung nach Anspruch 1, ferner umfassend eine Steuerkomponente, die dazu ausgelegt ist, eine Stromlast an der ersten Mehrzahl von Server-Racks basierend auf einer Auswahl zwischen einer Mehrzahl von Stromversorgungssträngen einschließlich des ersten Stromversorgungsstrangs (463) und des zweiten Stromversorgungsstrangs (461) bereitzustellen.

5. Vorrichtung nach Anspruch 1, wobei der erste Stromversorgungsstrang (463) einen Notstromgenerator und eine Steuerung zum Übertragen der ersten Mehrzahl von Server-Racks (473) auf die Versorgung durch den Notstromgenerator als Reaktion auf die Erkennung eines Ausfalls umfasst, und wobei der zweite Stromversorgungsstrang (461) dazu ausgelegt ist, durch Netzstrom versorgt zu werden.

6. Vorrichtung nach Anspruch 5, wobei der erste Stromversorgungsstrang (463) basierend auf einer Kapazität des Notstromgenerators mit Strom versorgt wird und wobei der zweite Stromversorgungsstrang (461) basierend auf einer Differenz zwischen einer Kapazität des Netzstroms und der Kapazität des Notstromgenerators mit Strom versorgt wird.

7. Verfahren, umfassend:
Einsetzen eines ersten Stromversorgungsstrangs (463), um eine erste Mehrzahl von Server-Racks (473) eines ersten Rechenzentrums (460) auf einer ersten Stufe eines Hochverfügbarkeitsdienstes, die mit einer ersten Verfügbarkeitszeit verbunden ist, mit Strom zu versorgen, wobei ein erster Stromversorgungsstrang (463) eine erste Mehrzahl von Komponenten (441) umfasst und wobei die erste Mehrzahl von Komponenten (441) eine erste Teilmenge (431) der ersten Mehrzahl von Komponenten (441) und eine zweite Teilmenge (432) der ersten Mehrzahl von Komponenten (441) umfasst;
Einsetzen eines zweiten Stromversorgungsstrangs (461), um eine zweite Mehrzahl von Server-Racks (471) des ersten Rechenzentrums (460) auf einer zweiten Stufe eines Hochverfügbarkeitsdienstes, die mit einer zweiten Verfügbarkeitszeit verbunden ist, mit Strom zu versorgen, wobei der zweite Stromversorgungsstrang (461) eine zweite Mehrzahl von Komponenten (442) umfasst, wobei die erste Verfügbarkeitszeit größer als die zweite Verfügbarkeitszeit ist, wobei die zweite Mehrzahl von Komponenten (442) eine erste Teilmenge (433) der zweiten Mehrzahl von Komponenten (442) und eine zweite Teilmenge (432) der zweiten Mehrzahl von Komponenten (442) umfasst; und
wobei die zweite Teilmenge (432) der ersten Mehrzahl von Komponenten (441) die zweite Teilmenge (432) der zweiten Mehrzahl von Komponenten (442) ist.

8. Verfahren nach Anspruch 7, ferner umfassend das Bereitstellen einer Stromversorgungslast basierend auf einer Auswahl zwischen einer Mehrzahl von Stromversorgungssträngen einschließlich des ersten Stromversorgungsstrangs (463) und des zweiten Stromversorgungsstrangs (461).

9. Verfahren nach Anspruch 7, ferner umfassend das Übertragen der ersten Mehrzahl von Server-Racks (473) auf die Versorgung durch einen Notstromgenerator des ersten Stromversorgungsstrangs (463) als Reaktion auf die Erkennung eines Ausfalls, wobei der zweite Stromversorgungsstrang (461) durch Netzstrom versorgt wird.

10. Verfahren nach Anspruch 9, wobei die Versorgung der ersten Mehrzahl von Server-Racks (473) basierend auf einer Kapazität des Notstromgenerators erfolgt und wobei die Versorgung der zweiten Mehrzahl von Server-Racks (471) basierend auf einer Differenz zwischen einer Kapazität des Netzstroms und der Kapazität des Notstromgenerators erfolgt.

11. Vorrichtung nach Anspruch 1, wobei der erste Stromversorgungsstrang (463) verteilte Redundanz umfasst und wobei der zweite Stromversorgungsstrang (461) nur durch eine Stromquelle mit Strom versorgt wird.

12. Vorrichtung nach Anspruch 1, wobei der erste Stromversorgungsstrang (463) zwei Stromverteilungseinheiten und zwei Stromschienen zum Bereitstellen von Strom für die erste Mehrzahl von Server-Racks (473) in einer Topologie mit doppelter Stromzuführung umfasst und wobei der zweite Stromversorgungsstrang (461) eine Stromverteilungseinheit und eine Stromschiene zum Bereitstellen von Strom für die zweite Mehrzahl von Server-Racks (471) in einer Topologie mit einfacher Stromzuführung umfasst.

13. Vorrichtung nach Anspruch 4, wobei die Auswahl eine dynamische Auswahl ist.

14. Vorrichtung nach Anspruch 1, wobei die zweite Teilmenge (432) der ersten Mehrzahl von Komponenten (441) eine Mehrzahl von statischen Schaltern umfasst, die dazu ausgelegt sind, eine alternative Stromquelle über mindestens zwei alternative Stromschienen bereitzustellen.

15. Vorrichtung nach Anspruch 14, ferner umfassend eine Mehrzahl von Zellen einschließlich einer ersten Zelle und einer zweiten Zelle, wobei jede Zelle der Mehrzahl von Zellen mindestens zwei Stromversorgungsstränge und mindestens zwei Stromverteilungseinheiten aufweist, wobei eine erste der mindestens zwei Stromschienen eine Stromschiene zu der ersten Zelle ist und wobei eine zweite der mindestens zwei alternativen Stromschienen eine Stromschiene zu der zweiten Zelle ist.

## Revendications

1. Appareil comprenant :
un premier circuit d'alimentation (463) comprenant une première pluralité de composants (441), le premier circuit d'alimentation (463) étant configuré pour fournir de l'énergie à une première pluralité de baies de serveurs (473) d'un premier centre de données (460) à un premier niveau de service à haute disponibilité associé à un premier temps de disponibilité, et dans lequel la première pluralité de composants (441) comprend un premier sous-ensemble (433) de la première pluralité de composants (441) et un second sous-ensemble (432) de la première pluralité de composants (441) ;
un second circuit d'alimentation (461) comprenant une seconde pluralité de composants (442), le second circuit d'alimentation (461) étant configuré pour fournir de l'énergie à une seconde pluralité de baies de serveurs (471) du premier centre de données (460) à un second niveau de service à haute disponibilité associé à un second temps de disponibilité, dans lequel le premier temps de disponibilité est supérieur au second temps de disponibilité, dans lequel la seconde pluralité de composants (442) comprend un premier sous-ensemble (433) de la seconde pluralité de composants (442) et un second sous-ensemble (432) de la seconde pluralité de composants (442) ; et
dans lequel le second sous-ensemble (432) de la première pluralité de composants (441) est le second sous-ensemble (432) de la seconde pluralité de composants (442).

2. Appareil selon la revendication 1, dans lequel le second sous-ensemble (432) de la première pluralité de composants (441) comprend une pluralité d'alimentations sans interruption.

3. Appareil selon la revendication 1, dans lequel le second sous-ensemble (432) de la première pluralité de composants (441) comprend une pluralité de commutateurs statiques qui sont configurés pour fournir une source d'alimentation alternative via une canalisation électrique alternative.

4. Appareil selon la revendication 1, comprenant en outre un composant de commande configuré pour fournir une charge électrique à la première pluralité de baies de serveurs sur la base d'une sélection parmi une pluralité de circuits d'alimentation comprenant le premier circuit d'alimentation (463) et le second circuit d'alimentation (461).

5. Appareil selon la revendication 1, dans lequel le premier circuit d'alimentation (463) comprend un générateur de secours et une commande pour transférer la première pluralité de baies de serveurs (473) afin qu'elles soient alimentées par le générateur de secours en réponse à la détection d'une défaillance, et dans lequel le second circuit d'alimentation (461) est configuré pour être alimenté par le réseau électrique.

6. Appareil selon la revendication 5, dans lequel le premier circuit d'alimentation (463) est alimenté sur la base d'une capacité du générateur de secours, et dans lequel le second circuit d'alimentation (461) est alimenté sur la base d'une différence entre une capacité du réseau électrique et la capacité du générateur de secours.

7. Procédé comprenant :
l'utilisation d'un premier circuit d'alimentation (463) pour fournir de l'énergie à une première pluralité de baies de serveurs (473) d'un premier centre de données (460) à un premier niveau de service à haute disponibilité associé à un premier temps de disponibilité, dans lequel un premier circuit d'alimentation (463) comprend une première pluralité de composants (441), et dans lequel la première pluralité de composants (441) comprend un premier sous-ensemble (431) de la première pluralité de composants (441) et un second sous-ensemble (432) de la première pluralité de composants (441) ;
l'utilisation d'un second circuit d'alimentation (461) pour fournir de l'énergie à une seconde pluralité de baies de serveurs (471) du premier centre de données (460) à un second niveau de service à haute disponibilité associé à un second temps de disponibilité, dans lequel le second circuit d'alimentation (461) comprend une seconde pluralité de composants (442), dans lequel le premier temps de disponibilité est supérieur au second temps de disponibilité, dans lequel la seconde pluralité de composants (442) comprend un premier sous-ensemble (433) de la seconde pluralité de composants (442) et un second sous-ensemble (432) de la seconde pluralité de composants (442) ; et
dans lequel le second sous-ensemble (432) de la première pluralité de composants (441) est le second sous-ensemble (432) de la seconde pluralité de composants (442).

8. Procédé selon la revendication 7, comprenant en outre la fourniture d'une charge électrique sur la base d'une sélection parmi une pluralité de circuits d'alimentation comprenant le premier circuit d'alimentation (463) et le second circuit d'alimentation (461).

9. Procédé selon la revendication 7, comprenant en outre le transfert de la première pluralité de baies de serveurs (473) afin qu'elles soient alimentées par un générateur de secours du premier circuit d'alimentation (463) en réponse à la détection d'une défaillance, dans lequel le second circuit d'alimentation (461) est alimenté par le réseau électrique.

10. Procédé selon la revendication 9, dans lequel l'alimentation de la première pluralité de baies de serveurs (473) est basée sur une capacité du générateur de secours, et dans lequel l'alimentation de la seconde pluralité de baies de serveurs (471) est basée sur une différence entre une capacité du réseau électrique et la capacité du générateur de secours.

11. Appareil selon la revendication 1, dans lequel le premier circuit d'alimentation (463) comprend une redondance distribuée, et dans lequel le second circuit d'alimentation (461) est alimenté par une seule source d'alimentation.

12. Appareil selon la revendication 1, dans lequel le premier circuit d'alimentation (463) comprend deux unités de distribution d'alimentation et deux canalisations électriques pour fournir de l'énergie à la première pluralité de baies de serveurs (473) selon une topologie à double cordon d'alimentation, et dans lequel le second circuit d'alimentation (461) comprend une unité de distribution d'alimentation et une canalisation électrique pour fournir de l'énergie à la seconde pluralité de baies de serveurs (471) selon une topologie à cordon d'alimentation unique.

13. Appareil selon la revendication 4, dans lequel la sélection est une sélection dynamique.

14. Appareil selon la revendication 1, dans lequel le second sous-ensemble (432) de la première pluralité de composants (441) comprend une pluralité de commutateurs statiques qui sont configurés pour fournir une source d'alimentation alternative via au moins deux canalisations électriques alternatives.

15. Appareil selon la revendication 14, comprenant en outre une pluralité de cellules comprenant une première cellule et une seconde cellule, chaque cellule de la pluralité de cellules ayant au moins deux circuits d'alimentation et au moins deux unités de distribution d'alimentation, dans lequel une première des au moins deux canalisations électriques est une canalisation électrique vers la première cellule, et dans lequel une seconde des au moins deux canalisations électriques alternatives est une canalisation électrique vers la seconde cellule.
